# EUROPEAN PATENT SPECIFICATION

(11) **EP 4 238 322 B1**
(45) Date of publication and mention of the grant of the patent: **02.12.2026**
(21) Application number: 21801091.6
(22) Date of filing: 26.10.2021
(51) Int. Cl.: H04W 4/02

(54) **METHOD FOR ALLOCATING RESOURCES IN A GEOGRAPHIC AREA**
VERFAHREN ZUR RESSOURCENZUWEISUNG IN EINEM GEOGRAFISCHEN GEBIET
PROCÉDÉ D'ATTRIBUTION DE RESSOURCES DANS UNE ZONE GÉOGRAPHIQUE

(30) Priority: 27.10.2020 IT 202000025489
(43) Date of publication of application: 06.09.2023
(73) Proprietor: Telecom Italia S.p.A., 20123 Milano (IT)
(72) Inventor: GONNET, Luca, 10148 TORINO (IT); MACCARIO, Pia Maria, 10148 TORINO (IT); ZECCHIN, Patrick, 10148 TORINO (IT)
(74) Representative: Cevini, Gaia
(86) International application number: PCT/EP2021/079618
(87) International publication number: WO 2022/090195

(56) References cited:
- US-A1- 2013 184 887
- US-A1- 2014 370 844
- US-A1- 2019 122 229
- US-A1- 2019 379 592

## Description

### Technical field

The present invention relates to the field of data management and data powered resource management. In particular, the present invention relates to a method for allocating resources in a geographic area, for instance a city.

### Background art

According to the United Nations report on the status of the world's cities (https://unhabitat.org), the number of urban residents is growing by almost 60 million each year. This population growth will lead to the situation in which over 60% of the world population will live in cities by 2030 and over 70% by 2050, using only 2% of the territory. As the urban population and the corresponding needs continue to expand, the management of all aspects of urban life and of social, economic and environmental well-being by the city authorities will be increasingly complex and it will be necessary to adopt "smart platforms".

In the context of the great effort being made to ensure that these urban areas are transformed from agglomerations of citizens and services into a "smart" environment, the ability to interpret the information gathered from various data sources becomes essential for being able to provide useful services to the City Manager and/or to the individual citizen.

The data of interest in this context are of different types. These data comprise data of an "open" type, namely data provided by the public administration, data coming from sensors distributed throughout the territory, data derived from resource consumption trends (e.g. electricity, gas, water, waste production, amount of telephone traffic, etc.), and data derived from human or device (e.g. a smartphone) presence indicators. These human or device presence indicators may comprise data records of calls in fixed and/or mobile communication networks (such as, for instance, the so called Call Data Records or CDRs in a GSM mobile communication network), information on the use of transport means, video recordings, information coming from people counting means, information coming from pollution data, etc. The expression "data related to the presence of people in a geographic area" used in this description is referring to data derived from resource consumption trends and/or data derived from human or device presence indicators as those cited above.

Nowadays, the set of data continuously generated by sensors and/or by presence detectors is truly impressive and represents an example of big data. The term "big data" was invented to describe the exponential growth of structured and unstructured data that are difficult to capture, store, manage and process using conventional data management or analysis techniques.

At the same time, there has been a great improvement in the calculation tools, both in terms of memory and of computational capacity, which allows to collect and analyse large data series. In particular, for a single phenomenon, a very large set of variables can be observed, and a huge amount of discrete observations, from a temporal point of view, of single complex entities can be gathered and processed.

Cao Zechum, Wang Sujing, Forestier Germain, Puissant Anne, Eick Christoph F., "Analyzing the composition of cities using spatial clustering", Proceedings of the 2nd ACM SIGKDD International Workshop on Urban Computing - UrbComp '13 (2013), p. 1, discloses a spatial clustering approach to discover interesting regions and regions which serve different functions in cities. Spatial clustering groups the objects in a spatial dataset and identifies contiguous regions in the space of the spatial attributes. The task of finding uniform regions in spatial data is formally defined as a maximization problem of a plug-in measure of uniformity and a prototype-based clustering algorithm named CLEVER is introduced to find such regions. Moreover, polygon models which capture the scope of a spatial cluster and histogram-style distribution signatures are used to annotate the content of a spatial cluster in the proposed methodology; they play a key role in summarizing the composition of a spatial dataset. Furthermore, algorithms for identifying popular distribution signatures and approaches for identifying regions which express a particular distribution signature are presented.

Liang Wang, Kunyuan Hu, Tao Ku, and Junwei Wu, "Urban Mobility Dynamics Based on Flexible Discrete Region Partition", International Journal of Distributed Sensor Networks, Volume 2014, Article ID 782649, focuses on taxicab moving trajectory records and presents a new approach to modeling and analyzing urban mobility dynamics. The proposed method comprises two phases. First, discrete space partition based on flexible grid is developed to divide urban environment into finite nonoverlapping subregions. By integrating mobility origin-destination points with covered region, the partitioned discrete subregions have better spatial semantics scalability. Then, mobility activity is studied and its distribution randomness during given time periods among discrete subregions. Moreover, the analysis of mobility linkage of mobility trips between different regions is carried out by O-D matrix.

Rozenfeld H.D., Rybski D., Andrade J.S. Jr, Batty M., Stanley H.E., Makse H.A., "Laws of population growth", Proc. Natl. Acad. Sci. USA. 2008 Dec. 2; 105(48):18702-7, discloses a method to designate metropolitan areas, denoted "City Clustering Algorithm" (CCA). The CCA is based on spatial distributions of the population at a fine geographic scale, defining a city beyond the scope of its administrative boundaries. The CCA is used to examine Gibrat's law of proportional growth, which postulates that the mean and standard deviation of the growth rate of cities are constant, independent of city size. The authors found that the mean growth rate of a cluster utilizing the CCA exhibits deviations from Gibrat's law, and that the standard deviation decreases as a power law with respect to the city size. The CCA allows for the study of the underlying process leading to these deviations, which are shown to arise from the existence of long-range spatial correlations in population growth. These results have socio-political implications, for example, for the location of new economic development in cities of varied size.

### Summary of the invention

The inventors have identified the problem of managing and allocating resources (e.g., electricity, gas, water, transport, data network bandwidth, radio frequencies, etc.) that are inherently limited, in particular of improving, dynamically in time, the geographical distribution of the available resources of this type. A solution to this problem could lead to concentrating the allocation of the available resources in a predictive way in the geographic areas where they are actually needed most. In order to predict the need for resources in such a dynamic way, it might be useful to identify, within a given geographic area such as a city, a number of sub-areas, even remote one from another, showing a similar trend in terms of consumption of one or more resources (e.g. electricity, gas, water, waste production, etc.) and/or in terms of one or more of the human or device presence indicators cited above.

In the light of the above, the Applicant has tackled the problem of providing a method for allocating resources within a given geographic area that allows improving, dynamically in time, the geographic distribution of the available resources on the basis of the actual users' needs.

According to the present invention, the claimed method comprises gathering and managing data related to the presence of people in the geographic area and allows to identify, within the given geographic area, a number of sub-areas showing a similar trend in terms of such data.

The possibility of identifying homogeneous clusters of sub-areas, namely groups of sub-areas that have a similar trend over time, based on a human or device presence trend or on daily resource consumptions (e.g. sub-areas showing presence or consumption peaks in the morning, or in the evening, or sub-areas showing constant trends, where presences or consumptions do not vary over time) allows to perform statistical analyses with very effective techniques. These analyses are of interest both for a public administration and for a service provider.

Indeed, thanks to these analyses, it is possible to learn more about the social and human dynamics of a certain geographic area and about the changes that occur in the considered context (e.g. increase/decrease in the resident population). For service providers, it is possible to profile their customers according to their consumption, to identify their habits and therefore to be able to supply services in a more effective way (e.g. to increase the phone coverage at certain times of the year or to supply more water at certain times/days of the week) or more appropriate commercial offers. In particular, a telecommunication service provider, for instance, may use the statistical analyses to evaluate the actual capacity of its network, to better plan future deployments of the network resources and/or to define more personalized commercial offers for the network users.

According to the present invention, the geographic area under examination is preferably subdivided into a number of sub-areas, not necessarily of similar size, which will be referred to as "pixels"; then, data related to the presence of people associated with these pixels are gathered and clusters of pixels, comprising not necessarily contiguous pixels, are identified, each cluster comprising a number of pixels showing a similar trend in terms of the gathered data.

According to a first aspect, the present invention provides a method for allocating resources in a geographic area, the method comprising:
a) subdividing said area (A) into a number of pixels;
b) selecting an observation period and subdividing said observation period in a number of time sub-intervals;
c) acquiring a data set associated with said pixels during said observation period, the data set comprising, for each pixel, a set of observations related to the presence of people in said geographic area (A), wherein each observation derives from an estimate or a measurement of a resource consumption or a presence indicator;
d) processing said data set to identity one or more typical time sub-intervals during said observation period;
e) on the basis of a sub-set of data of said data set, the sub-set of data being associated with the identified one or more typical time-subintervals of said observation period, applying a clustering algorithm to partition the pixels into a number of clusters, each cluster comprising a respective group of pixels associated with similar trends in the resource consumption and/or in the presence indicator; and
f) allocating resources to a cluster of the number of clusters on the basis of the trends.

Preferably, processing the data set comprises checking whether each observation of the data set has a value higher than a first acceptability threshold, Sₘₐₓ, or lower than a second acceptability threshold, Sₘᵢₙ, and determining an acceptable observation as an observation having a value lower than or equal to the first acceptability threshold, Sₘₐₓ, and higher than or equal to the second acceptability threshold, Sₘᵢₙ.

Preferably, processing the data set comprises checking whether the number of acceptable observations, |P|, does not differ from the number of observations of the acquired data set by more than a predefined tolerance, ε, the number of observations of the acquired data set being equal to N x |T| **x M,** where N is the number of observations within a time sub-interval, d, M is the number of pixels, and |T| is the number of sub-intervals of the observation period, T.

Preferably, processing the data set comprises:
- checking, for each time sub-interval, d, whether the number of observations of the considered time sub-interval, |P_{d}|, is higher than or equal to an expected value corresponding to the number of observations of the acquired data set for the predefined sub-interval, d, plus a further predefined tolerance, where the number of observations of the acquired data set for the predefined sub-interval is equal to N x M and the further predefined tolerance is equal to ε/|T|;
- in the negative, identify one or more pixels associated with a number of observations which is smaller than an expected value of observations;
- in case a pixel is identified which, during the considered time sub-interval, d, is associated with a number of acceptable observations smaller than the expected value of observations, checking whether the number of missing observations is higher than a predefined threshold or whether observations are missing for a time period, within the considered time sub-interval, d, longer than a predefined number of hours;
- in the affirmative, discard from the data set the observations related to the identified pixel and associated with the considered time sub-interval, d.

Preferably, processing the data set comprises for each time sub-interval, d, checking whether the number of discarded pixels is higher than a further predetermined threshold, and, in the affirmative, discarding the observations associated with the considered time sub-interval, d, from the data set.

Preferably, processing the data set comprises identifying pixels where (xₘₐₓ(i) - xₘᵢₙ(i)) ≤ S_{low} , where xₘₐₓ(i) is the maximum value of the observations associated with a i-th pixel over a considered time period, xₘᵢₙ(i) is the minimum value of the observations associated with the i-th pixel over the considered time period, and S_{low} is a pre-defined threshold, wherein the considered time period comprises a number of consecutive time sub-intervals, and discarding from the data set the observations related to the identified pixels.

Preferably, step e) comprises computing a normalized value, x_{Norm}(i, t), for each value of an observation, x(i, t), within the sub-set of data associated with a i-th pixel, wherein: ${x}_{Norm} \left(i, t\right) = \frac{x \left(i, t\right)}{\overline{x} \left(i\right)}$ where $\overline{x} \left(i\right) = \frac{1}{N ′} {\sum }_{t = 1}^{N ′} x \left(i, t\right) ,$ and N' is an integer number representing the number of observations of the sub-set of data for the i-th pixel.

Preferably, step e) comprises:
- applying a functional data analysis technique to transform the normalized values in a time variable x_{Norm}(i, t) by rewriting them as a linear combination of a set of basis functions as: ${x}_{Norm} \left(i, t\right) ≅ {\sum }_{l} {c}_{l} \left(i\right) {φ}_{l} \left(t\right)$
   where I is an integer index ranging from 1 to an integer number L representing a total number of basis functions and the basis functions are: ${φ}_{o} \left(t\right) = 1 ;$ ${φ}_{l} \left(t\right) = \frac{cos \left(lt\right)}{π}$ when I is an even number; ${φ}_{l} \left(t\right) = \frac{sin \left(lt\right)}{π}$ when I is an odd number,
   while coefficients c_{I}(i) are real-valued coefficients;
- applying a principal component analysis technique as follows: ${x}_{Norm} \left(i, t\right) ≅ {\sum }_{l} {c}_{l} \left(i\right) {φ}_{l} \left(t\right) ≅ {\sum }_{j = 1}^{k ′} {p}_{j} \left(i\right) {ψ}_{j} \left(t\right)$ where
   ψⱼ(t) are the functional principal components;
   pⱼ(i) are the corresponding coefficients;
   k' is a total number of principal components where 1≤k'≤L;
- determining a matrix, Y, of dimension equal to M x k', M being the number of pixels, wherein an i-th row of the matrix, Y, comprises the coefficients, pⱼ(i), of the functional principal components for the i-th pixel.

Preferably, the number, k', of principal components is 3.

Preferably, step e) comprises applying a centroid-based clustering algorithm to the matrix, Y. More preferably, the clustering algorithm is a fuzzy k-means algorithm.

Preferably, step e) comprises applying a method for checking an optimal number of clusters, the method being an Elbow method or a silhouette method.

Preferably, step e) comprises checking the stability of the clustering by:
- determining a stability matrix wherein an entry (i, j) in the stability matrix corresponds to the number of pixels belonging to a i-th cluster of the clustering in a first day which have been assigned to a j-th cluster of the clustering in a second day;
- determining a number of unstable pixels, wherein each unstable pixels is a pixel that has been associated with different clusters over the considered first day and second day;
- comparing the number of unstable pixels to a threshold, S_{stab};
- determining that the clustering is unstable if the number of unstable pixels is higher than the threshold, S_{stab}.

According to a second aspect, the present invention provides a computer program product comprising computer-executable instructions for performing, when the program is run on a computer, the steps of the method as set forth above.

According to a third aspect, the present invention provides a system for allocating resources in a geographic area, the system comprising:
- a computation engine configured to:
   - subdivide the area into a number of pixels;
   - select an observation period and subdivide the observation period in a number of time sub-intervals;
   - acquire a data set associated with the pixels during the observation period, the data set comprising, for each pixel, a set of observations related to the presence of people in said geographic area, wherein each observation derives from an estimate or a measurement of a resource consumption or a presence indicator;
   - process the data set to identity one or more typical time sub-intervals during the observation period;
   - on the basis of a sub-set of data of the data set, the sub-set of data being associated with the identified one or more typical time sub-intervals of the observation period, apply a clustering algorithm to partition the pixels into a number of clusters, each cluster comprising a respective group of pixels associated with similar trends in the resource consumption and/or in the presence indicator; and
   - allocate resources to a cluster of the number of clusters on the basis of the trends;
- a repository configured to store the data set; and
- a user interface configured to receive inputs from, and to provide outputs to, a user of the system.

According to a fourth aspect, the present invention provides a method for providing a service in a geographic area, the method comprising:
a) subdividing the area into a number of pixels;
b) selecting an observation period, **T,** and subdividing the observation period in a number of time sub-intervals;
c) acquiring a data set associated with the pixels during the observation period, the data set comprising, for each pixel, a set of observations related to the presence of people in the geographic area, wherein each observation derives from an estimate or a measurement of a resource consumption or a presence indicator;
d) processing the data set to identity one or more typical time sub-intervals during the observation period;
e) on the basis of a sub-set of data of the data set, the sub-set of data being associated with the identified one or more typical time-subintervals of the observation period, applying a clustering algorithm to partition the pixels into a number of clusters, each cluster comprising a respective group of pixels associated with similar trends in the resource consumption and/or in the presence indicator;
f) allocating resources to a cluster of the number of clusters on the basis of the trends; and
g) providing the service in the cluster on the basis of the allocated resources.

### Brief description of the drawings

The present invention will become clearer from the following detailed description, given by way of example and not of limitation, to be read with reference to the accompanying drawings, wherein:
- Figure 1 schematically shows an exemplary geographical area under investigation and a block scheme of a data management system according to the present invention;
- Figure 2 is a flowchart illustrating steps of the method according to the present invention;
- Figure 3 is a flowchart illustrating further steps of the method according to the present invention;
- Figure 4 is a flowchart illustrating further steps of the method according to the present invention;
- Figure 5 shows an exemplary dissimilarity matrix that can be used to indicate a dissimilarity between different days of an observation month according to embodiments of the method of the present invention;
- Figure 6 shows an exemplary week correlation matrix that can be used to indicate a correlation between weekdays of the observation month according to embodiments of the method of the present invention;
- Figure 7 shows an exemplary day correlation matrix that can be used to indicate a correlation between hours of the observation days according to embodiments of the method of the present invention;
- Figure 8 is a flowchart illustrating further steps for reducing the data set according to the method according to the present invention;
- Figures 9a and 9b show two exemplary graphs reporting the value of the presence of people in five different pixels over time;
- Figure 10 is a flowchart illustrating further steps for determining the clusters according to the method according to the present invention;
- Figure 11 shows an exemplary graph resulting from the application of the Elbow method according to embodiments of the present invention; and
- Figure 12 shows two exemplary stability matrices that can be used to check the present of unstable pixels according to embodiments of the present invention.

### Detailed description of preferred embodiments of the invention

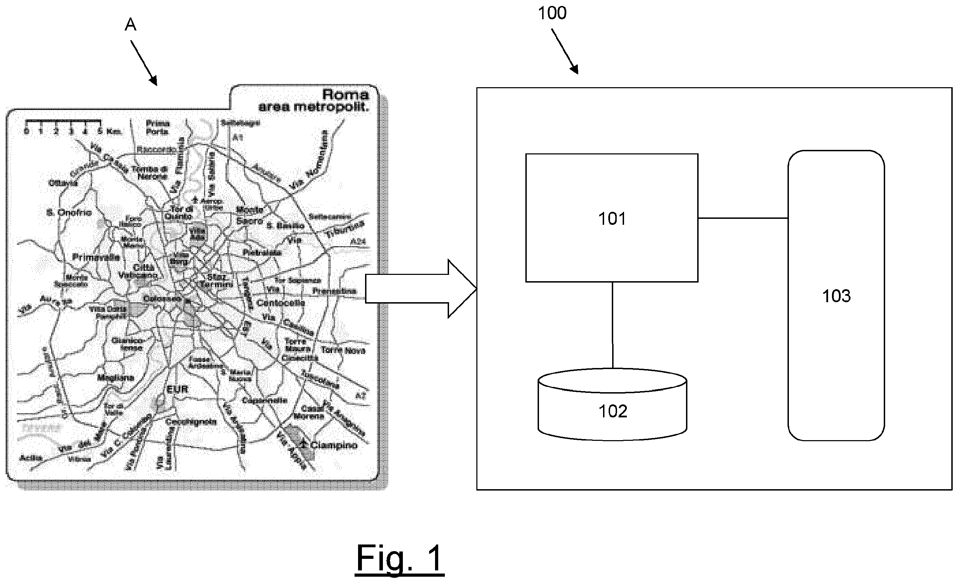

Figure 1 schematically shows a geographic area A (in the following description, simply denoted as "area") and a data management system 100 according to an embodiment of the present invention.

The area A is a selected geographic region which is to be examined according to the method of the present invention. For example, the area A may be either a district, a town, a city, or any other kind of geographic area. It will be assumed, for sake of non-limiting example, that the area A is a city (in Figure 1, the map of the city of Rome is schematically reported).

The area A is preferably subdivided into a plurality of sub-areas or pixels.

The method for managing data according to the present invention comprises examining the area A and is based on data collected on a time basis, the data being related to the presence of people in the area A and being hence indicative of a behaviour of the people inside the area A, as well as of a variation in such behaviour. In particular, examining the area A comprises associating the area A with K groupings of pixels (called clusters), each grouping comprising pixels associated with a similar behaviour of the people therein.

Data comprise estimates and/or measurements related to resource consumption (e.g. electricity, gas, water, waste production). Alternatively, or in addition, data comprise estimates and/or measurements of human or device presence indicators, such as, for instance, call records, people counting information, video recordings, information about use of transport means, information about pollution, etc.

For sake of simplicity, in the following description, the data used comprise a set of observations related to the presence of people in the considered geographic area, wherein each observation derives from an estimate or a measurement of a resource consumption or from an estimate or a measurement of a presence indicator. For instance, an observation may indicate the number of people present within a given pixel at a given time of the day during a given day of the week within the considered month as observation period, which may be derived from measurements of the positioning data of the user mobile devices present within the given pixel as retrieved from the mobile communication network serving the area A. According to another example, an observation may indicate the number of appliances consuming electricity within a given pixel at a given time of the day during a given day of the week, which may be derived from measurements of the electricity consumption data.

For sake of example, in the following description, the term "observation" will refer to the number of people whose presence has been observed within a given pixel at a given time of the day.

**The** following notation will be used:
- M is the number of pixels in which the area A under consideration is subdivided. M is an integer number higher than 1. Preferably, all the pixels inside the area A have a same size;
- T is an observation period (for example a month);
- t is an integer index indicating a time instance (e.g. a time during the day) associated with an observation;
- d is a predefined time sub-interval of the observation period T (for instance, a day);
- D represents the set of sub-intervals d in a given observation period T;
- H is a number of observations in an hour;
- N is the total number of observations within the time sub-interval d (for instance, N=96 if H=4 and the sub-interval is a day);
- i is an integer index indicating a pixel (i=1, 2, ..., M);
- I represents the set of pixels;
- P represents the set of observations used for the analysis; during each step or sub-step of the analysis, the set of observations will be associated with adjective "current" to indicate the data set resulting from the previous analysis step or sub-step;
- Pᵢ represents the set of observations associated with pixel i, where i=1, 2, ..., M;
- P_{d} represents the set of observations associated with all the pixels during the time sub-interval d;
- y(i, t, d) is an observation associated with pixel i at time indicated by index t of time-sub-interval d;
- x(i, t) is an observation associated with pixel i at time indicated by index t of a "typical time-sub-interval (e.g. day)";
- a "typical time sub-interval" represents a particular time sub-interval, e.g. a day, which is used for reducing the amount of data, as it will be described herein after.

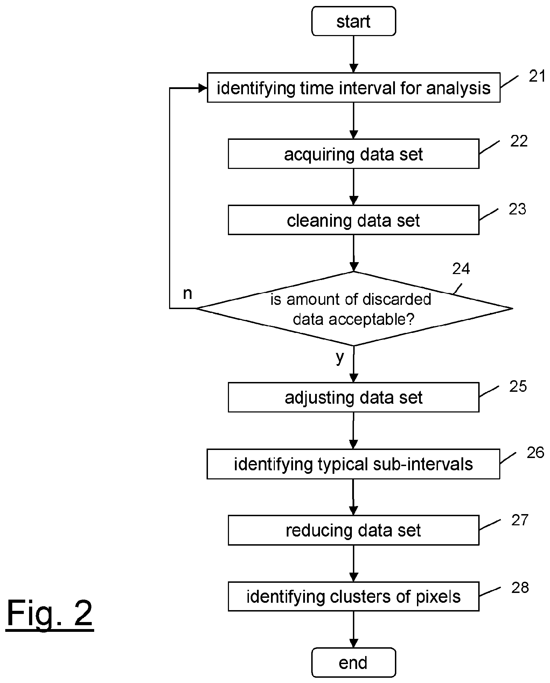

The method according to the present invention comprises the steps illustrated in the flowchart of Figure 2. The geographic area A is subdivided in a number M of pixels, for which a number of data is available, namely a number of data y(i, t, d) corresponding to the observations gathered in the time interval **T,** subdivided in time sub-intervals d, each time-subinterval being associated with N observations. As an outcome of the method according to the present invention, the geographic area A is associated with K clusters of pixels, wherein each cluster comprises a group of pixels associated with similar trends in a resource consumption and/or in a presence indicator, as it will be clearer from the following detailed description of the method of the present invention. As illustrated in Figure 2, the method according to the present invention comprises a step including the identification of the time interval for the analysis (step 21), and a subsequent step according to which data are gathered for the identified time interval (step 22). Step 23 comprises cleaning the data that has been gathered for the considered time interval. At the end of this operation, it is checked whether the amount of cleaned data is sufficient for the subsequent analysis (step 24). Step 25 comprises adjusting the data set. Step 26 comprises identifying, on the basis of the cleaned data, one or more typical time-sub-intervals, as already cited above. Step 27 comprises reducing the data associated with the identified typical time-sub-interval(s). Step 28 comprises determining the K clusters associated with the geographic area A. Each of the mentioned steps will be described in detail herein after.

The system 100 is preferably configured to gather the data related to the presence of people inside the area A. For example, the system 100 may be connected to a mobile communication network, such as a 2G, 3G, 4G or higher generation cellular communication network, serving the area A, and it may be configured to receive from the mobile communication network data related to the position of the users' communication devices (e.g. smartphones) located within the area A, associated with appropriate identifiers of the devices (e.g. the International Mobile Equipment Identity or IMEI). As known, data related to the position of the users' communication devices may be collected by the base stations of the mobile communication network anytime a user's device interacts with the base stations (e.g. at power on/off, at location area update, at incoming/outgoing calls, at sending/receiving SMS or MMS, at Internet access, etc.). The system 100 preferably comprises a computation engine 101 configured to process the data, and a repository 102 (such as a data base) configured to store the data. The system 100 preferably comprises a user interface 103 configured to receive inputs from, and to provide outputs to, a user of the system 100. The term "user" of the system 100 may refer to a human being and/or to an external computing system. The output of the cluster identification process according to the present invention allows performing statistical analyses which may be of interest to a public administration and/or a service provider, for instance to more efficiently plan the distribution of network resources and/or define personalized commercial offers.

The system 100 may be implemented on a single computer, or on a network of distributed computers, or on one or more virtual machines running on one or more computers.

With reference again to the flowchart of Figure 2, the first step 21 of the method of the present invention involves identifying an initial observation period T for the analysis. The observation period T for the analysis is preferably a predetermined time interval, for instance two months. The observation period T in subdivided into a number D of time sub-intervals (e.g., days), which, as already mentioned above, will be indicated by the notation d. The choice of the initial observation period T is preferably made so as to consider a sufficient number of days to get a reliable analysis and to minimize the number of "perturbing" events occurring within the area A (in other words, in order to rule out events perturbing the normal life within the area A, such as, for instance, a public holiday, a fair, a sport event, a concert, the day at which school starts/ends, etc.).

At step 22 of the method according to the present invention, the system 100 preferably retrieves the data that will be used for the analysis. **The** data may be retrieved from different sources of data (such as, for instance, from different databases, data lakes, data warehouses, etc.) and stored in the repository 102. Since different sources of data may be involved in the retrieving of data, step 22 may comprise an operation of transforming data so as to make them reciprocally coherent. For instance, this operation may involve conforming units of measure and/or reference points, such as a reference geographic unit for the positioning data.

For instance, as already anticipated above, the system 100 may retrieve positioning data and device identifiers from the mobile communication network serving the area A. **In** operation, each instance of positioning data as well as the corresponding device identifier, which are received from the mobile communication network, is associated with respective timing data (namely, the date and time instant at which the positioning data are detected) and stored in the repository 102. In particular, the data may be continuously retrieved by the system 100 from the mobile communication network. Alternatively, the data may be collected by the system 100 periodically (e.g. on a daily or weekly basis). For example, the data may be transferred from the mobile communication network to the system 100 as they are generated, in a sort of "push" modality, or they may be collected daily in the mobile communication network and then transferred to the system 100 periodically or upon request.

**The** data stored in the repository 102 for the observation period T are made available to the computation engine 101 for processing according to steps 23-28 of the flowchart of Figure 2.

Preferably, steps 23-28 are implemented at the computation engine 101 by one or more software program products running in the computation engine 101, which are stored in a memory of the system 100 (possibly, they may be stored in the repository 102).

Step 23 comprises cleaning the data set that has been gathered for the observation period T. The step of cleaning the data set preferably comprises checking the data set. In turn, checking the data set preferably comprises a first check related to the "acceptability" of the data comprised in the data set. This means checking whether each datum of the data set, namely each observation y(i, t, d), has a value higher than a first acceptability threshold Sₘₐₓ or lower than a second acceptability threshold Sₘᵢₙ and in any one of these cases discarding it. For any considered datum, the first acceptability threshold and the second acceptability threshold are specifically pre-defined in accordance with the type of datum being considered. The first acceptability threshold Sₘₐₓ may have a value related to the geographic context and be pre-defined so as to identify a datum having an anomalous value. The second acceptability threshold Sₘᵢₙ may have a value equal to 0, which allows excluding data with negative values, or a pre-defined value different from 0 which allows excluding data with less significant values for example related to the presence of M2M (Machine-to-Machine) devices in the considered area A. At the end of this first check (acceptability check), the current data set preferably comprises only acceptable observations y(i, t, d), namely observations y(i, t, d) such as: $∀ i ∈ I , ∀ t ∈ T , ∀ d ∈ D {S}_{min} \leq y \left(i, t, d\right) \leq {S}_{max} .$

In other words, the observations that do not comply with the equation above are preferably discarded from the data set.

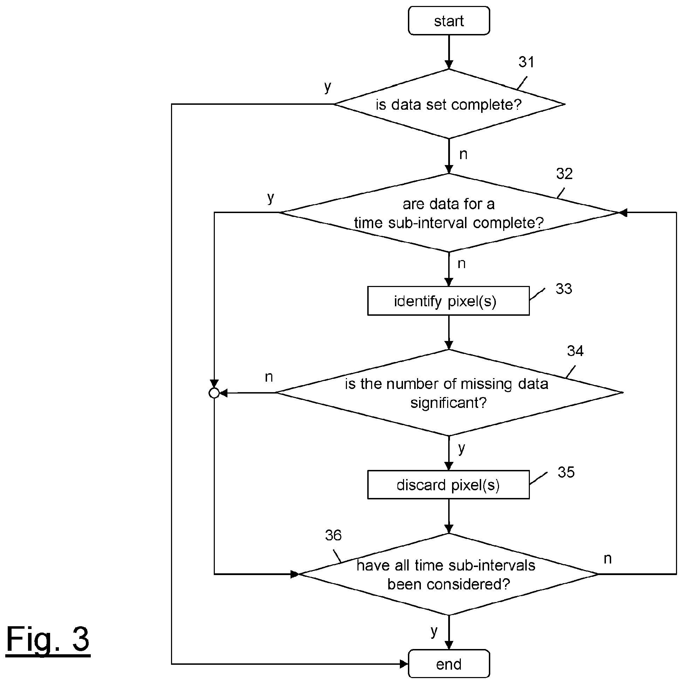

Then, checking the data set preferably comprises a second check related to the completeness of the data comprised in the current data set (namely, the data set comprising only acceptable observations according to the first check mentioned above). This second check is illustrated in the flow chart of Figure 3. Checking the completeness of the data set comprises, at step 31, checking whether the number of observations within the current data set is complete, namely whether it does not differ significantly from the number of observations of the gathered data set. This check can be written as follows: $check if N \times \left|T\right| \times M - \left|P\right| \leq ε ,$ **wherein N** is the total number of observations within the time sub-interval d, |T| is the number of sub-intervals of the observation period **T,** M is the number of pixels, |P| is the number of observations comprised in the current data set (namely, the cardinality of the current data set of observations P) and ε represents a pre-defined tolerance. The value ε of the tolerance is preferably related to the number of observations that are gathered for a single pixel within the sub-interval d, the number of discarded observations after the first check, the first acceptability threshold Sₘₐₓ and the second acceptability threshold Sₘᵢₙ. This tolerance is related to the specific context in which the method operates. If, for example, 6 observations per hour are foreseen for a total of 144 daily observations over 1000 pixels, it may be acceptable to lose 720 observations per day, i.e. those relating to 5 pixels or 0.5% of the total number of pixels, if the second acceptability threshold Sₘᵢₙ has been set to 0, i.e. no data relating to M2M or rural areas have already been filtered. But if one wants to filter such data, i.e. when the value of second acceptability threshold Sₘᵢₙ is higher (for example equal to the average number of transactions per hour of an IoT device, or equal to 1 in order to exclude rural areas) the value of the tolerance must take into account the daily observations related to the pixels that may be excluded.

In case the difference is higher than the pre-defined tolerance ε, the method provides for checking, for each sub-interval d of the considered observation period T, whether the number of observations of the considered sub-interval is complete (step 32), namely: $check if \left|{P}_{d}\right| \geq N \times M + ε / \left|T\right| ,$ wherein |P_{d}| is the number of observations comprised in the current data set and related to all pixels during the considered time sub-interval d and ε/|T| is the pre-defined tolerance. In case this check is negative (in other words, in case the difference, in absolute value, between the expected theoretical number of observations during the considered time sub-interval d and the number of observations associated with the considered time sub-interval d in the current data set, is higher than the predefined tolerance), the method provides for identifying the one or more pixels currently associated with a number of observations which is smaller than the expected theoretical value (step 33).

In case a pixel is identified which, during the considered time sub-interval d, is associated with a number of acceptable observations smaller than the expected theoretical value, the method provides for checking whether the number of missing observations is significant (step 34), which means checking: whether (i) this number is higher than a predefined threshold or (ii) observations are missing for a time period, within the time sub-interval d, longer than a predefined number of hours (e.g. missing observations for three consecutive hours during the day). In case this check is positive, all the observations related to the identified pixel and associated with the considered time sub-interval d are discarded from the current data set (step 35). These identified pixels will be referred to as "discarded pixels".

Once the operation of checking the completeness of the observations for all the considered time sub-intervals is terminated (step 36), the method provides for performing the following further checks:
- for each time sub-interval d, checking whether the number of discarded pixels is higher than a predetermined threshold; in the affirmative, the observations associated with the considered time sub-interval d are discarded from the current set of data;
- checking whether the discarded pixels are the same for different time sub-intervals; in the affirmative, the observations associated with the discarded pixels are removed from the current set of data for the considered time sub-interval d or for the entire observation period;
- checking whether the discarded pixels are geographically adjacent; in the affirmative, if this situation repeats over several days, it may be necessary to evaluate the topographical/demographic or commercial characteristics of the pixels in that they could represent an area with peculiar characteristics not previously identified and therefore they may represent a cluster in themselves.

Again with reference to the flow chart of Figure 2, at step 24, preferably, the method provides for evaluating the amount of discarded data. If the amount of discarded data exceeds a threshold, it is necessary to select a new period on which to recover data that can be separated from the previous period or contain a greater number of days.

At step 25, preferably, the method provides for performing an adjustment of the data set by possibly discarding the observations associated with one or more given pixels and/or related to one or more given days. In particular, step 25 may comprise the following operations:
i) identifying pixels where observations associated with a given presence indicator do not significantly vary over a pre-determined period of time (e.g. a number of consecutive time sub-intervals, or the entire observation period T), namely pixels wherein: $\left({x}_{max}\left(i\right)-{x}_{min}\left(i\right)\right) \leq {S}_{low}$ where xₘₐₓ(i) is the maximum value of the observations associated with generic pixel i over the considered time period, xₘᵢₙ(i) is the minimum value of the observations associated with generic pixel i over the considered time period, and S_{low} is a pre-defined threshold representing a required minimum variation of the considered observations for the subsequent analysis.
ii) identifying anomalous pixels and/or anomalous day (optional);
iii) identifying portions of area A which, during the observation period **T,** are interested by specific event(s), wherein the observations associated with such portions are strongly affected by those event(s) (optional).

Operation (i) further comprises discarding from the current data set the observations related to the identified pixels. Similarly, also operation (ii) further comprises discarding from the current data set the observations associated with the anomalous pixels and/or with the anomalous time sub-intervals (e.g. days).

In particular, as to optional operation (ii), an "anomalous pixel" is preferably identified as follows. For each pixel i of the area A, the following sum is preferably computed: ${P}_{i} = {\sum }_{t = 1}^{N} y \left(i, t, x\right)$ where y(i, t, x) is the observation associated with pixel i at time indicated by index t of time-sub-interval x. N is the number of observations within time-sub interval x. For instance, sum Pᵢ may indicate the number of people whose presence has been observed within pixel i during day x of the considered observation period. Then, the computed sum Pᵢ is compared with an expected value Aᵢ, which can be determined from historical data, demographic information, statistics, etc. If, for pixel i, the computed sum Pᵢ is not nearly equal to the expected value Aᵢ over each one of a pre-determined number of consecutive time sub-intervals, pixel i is identified as an "anomalous pixel". For each anomalous pixel, it may be checked whether there have been errors during the process of gathering the observations or whether the pixel belongs to a portion of area A which may host events that may perturb the observations. In case no error/perturbation is found possibly affecting the observation associated with the anomalous pixel, the observations associated with pixel i are preferably discarded from the current data set.

Further, in case the number of anomalous pixels for the same sub-interval is higher than a pre-defined threshold, the method provides for checking the observations associated with the considered sub-interval in deeper detail. This means splitting the time sub-interval into time periods grouping a number of hours or a number of minutes (for instance, splitting a day into quarters of an hour) and considering the difference between observations from any one of the time periods and the subsequent one. If the number of anomalous pixels wherein the difference is higher than a first threshold (e.g. 1%) is higher than a second threshold (e.g. 300), the observations associated with the considered time sub-interval are preferably discarded from the current set of data. Such a time sub-interval is referred to an "anomalous time sub-interval".

As to optional operation (iii), it further comprises discarding from the current set of data the observations associated with pixels belonging to portions of the area A identified as being strongly affected by specific event(s).

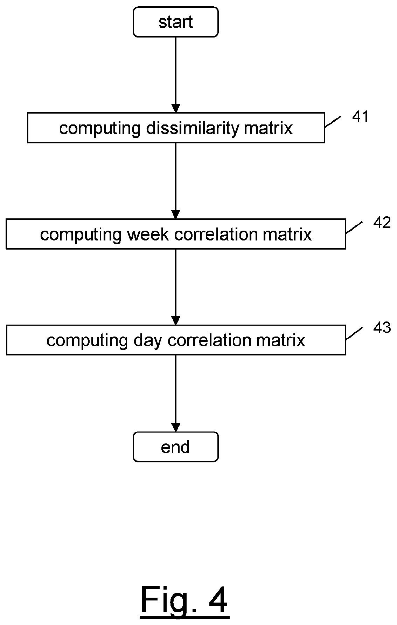

Referring back to the flow chart of Figure 2, step 26 comprises identifying, on the basis of the current data set, one or more typical time-subintervals. Identification of the typical time sub-intervals is performed in order to limit the amount of data for the successive analysis. Figure 4 shows a flow chart illustrating the steps relating to the operation of identifying the typical time sub-intervals. For sake of simplicity, in the following description, reference will be made to an observation period T as a month and to time-sub-intervals as the days of the considered month.

At step 41, a dissimilarity matrix is computed. **The** dissimilarity matrix is a square matrix having a same number of rows and columns, this same number being equal to the number of days of the considered month.

Each record of the dissimilarity matrix preferably comprises an index of dissimilarity D between the observations of the day associated with the considered row of the matrix (day x) and the observations of the day associated with the considered column (day y). **The** dissimilarity index D(x, y) is a real number: the higher its value, the higher the dissimilarity between the considered days. **The** dissimilarity index D(x, y) can be computed as the Euclidean distance between two arrays of values associated with day x and day y, wherein each value of an array represents the sum, over all the pixels, of the values of the observations associated with a given time instance of the considered day. Hence, the dissimilarity index D(x, y) can be computed as follows: $D \left(x, y\right) = \left|{P}_{x}*-{P}_{y}*\right|$ where: ${P}_{x}^{*} = {\sum }_{i = 1}^{M} y \left(i, t, x\right) { and P}_{y}^{*} = {\sum }_{i = 1}^{M} y \left(i, t, y\right) .$

It is to be noticed that other types of distance can be used, in alternative to the Euclidean distance, to compute the dissimilarity index D(x, y), such as the Manhattan distance or the Hamming distance.

Once the distances are computed, they can be normalized so that the dissimilarity index D(x, y) ranges between 0 (no dissimilarity) and 1 (maximum dissimilarity).

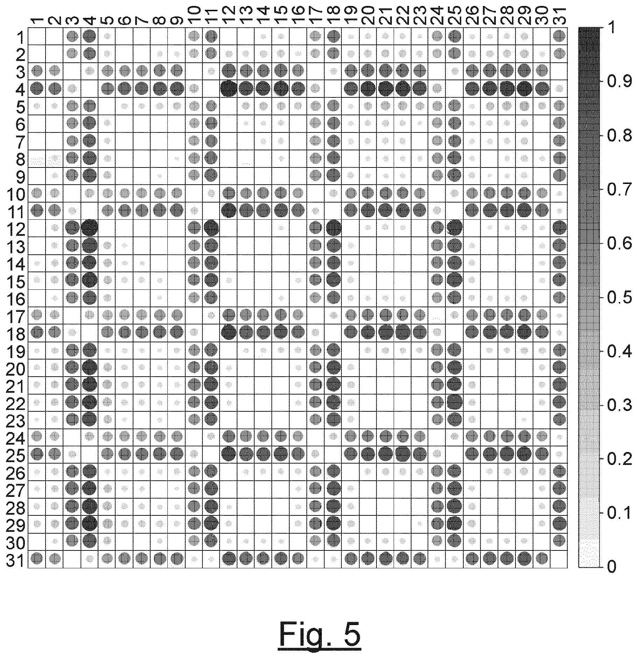

Figure 5 shows an exemplary dissimilarity matrix for a month comprising 31 days. **The** matrix reports, on a grey scale, the dissimilarity indexes between each couple of days of the month. **The** value of the dissimilarity index is represented as a dot: the larger and darker the dot, the higher the dissimilarity index.

At step 42, a week correlation matrix is computed. Indeed, when, on the basis of the previous analysis, a relationship is observed between, for instance, the number of presences and the specific day of the week (e.g. Monday, Tuesday, etc.), a second matrix may be built to identify the correlations of the different days with each other. For instance, it may happen that the seven days of a week are analysed together to define a sub-area; but this could not be the right choice because of specific events that can occur just a single day of the week, such as a local open-air market. Hence, the analysis can be negatively influenced by classifying as different two sub-areas that are exactly the same six days out of seven. Therefore, in this second type of grouping, the days of the week with a similar trend are sought (e.g. Tuesday has a number of presences similar to Thursday but different from Sunday).

**The** week correlation matrix is a square matrix having a same number of rows and columns, this same number being equal to the number of days within a week. Each record of the week correlation matrix preferably comprises a week correlation index C_{w}(sx, sy) indicating the correlation between the observations of the week day associated with the considered row of the matrix (day sx) and the observations of the week day associated with the considered column of the matrix (day sy).

**The** week correlation index C_{w}(sx, sy) is for example computed as follows. Firstly, a sum Pₛ^{*} is computed for each day of the week (Monday, Tuesday, Wednesday, Thursday, Friday, Saturday, Sunday) as the sum of the values of the observations associated with the considered weekday s (e.g. each Monday) within the given month, as follows: ${P}_{s}^{∗} = {\sum }_{i = 1}^{M} {\sum }_{d = 1}^{X} y \left(i, t, d\right)$ where, for each considered weekday s, Pₛ^{*} indicates an array of N values corresponding to the number of time instances within a day, wherein each value is associated with a given time instance t and is the sum, over all the pixels and over the number X of occurrences of the considered weekday s within the considered month, of the related observations.

The week correlation index C_{w}(sx, sy) related to the correlation of weekday sx and weekday sy may be computed as follows: ${C}_{w} \left(sx, sy\right) = \frac{cov \left({P}_{sx}^{∗}, {P}_{sy}^{∗}\right)}{sd \left({P}_{sx}^{∗}\right) ⋅ sd \left({P}_{sy}^{∗}\right)}$ where Pₛₓ^{*} is the array containing the sums of observations of weekday sx computed as mentioned above (i.e. an array of N values, for instance 96 values), P_{sy}^{*} is the array containing the sums of observations of weekday sy computed as already mentioned above (i.e. an array of N values, for instance 96 values), cov(·) is the covariance and sd(·) is the standard deviation. Data are comparable if the number of occurrences of weekday sx and the number of occurrences of weekday sy are the same within the considered month.

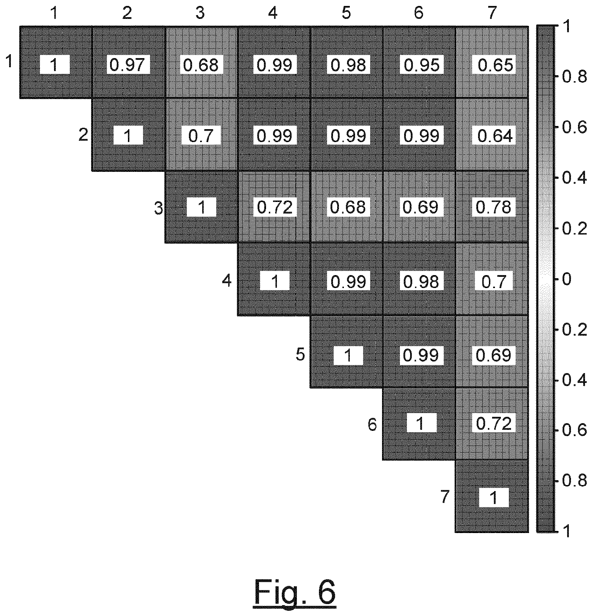

Figure 6 shows an exemplary week correlation matrix. The weekdays are indicated with numbers 1 (Monday), 2 (Tuesday), 3 (Wednesday), 4 (Thursday), 5 (Friday), 6 (Saturday), 7 (Sunday). The matrix reports, on a grey scale, the values of the week correlation index between each couple of weekdays. The week correlation index of the exemplary matrix of Figure 6 ranges between -1 and 1. As apparent, the week correlation matrix is a diagonal matrix. The values on the diagonal are all equal to 1. The matrix of Figure 6 shows that, for example, the observations of the Wednesdays and the observations of the Sundays are very different from the observations of the other weekdays.

At optional step 43, a day correlation matrix is computed.

The day correlation matrix is a square matrix having a same number of rows and columns, this same number being equal to the number of hours during a day (or, alternatively to a number of fractions of an hour within a day). For simplicity, in the following description, reference will be made to the hours of the day. Each record of the day correlation matrix preferably comprises a day correlation index C_{d}(hx, hy) indicating the correlation between the observations of the hour associated with the considered row of the matrix (hour hx) and the observations of the hour associated with the considered column of the matrix (hour hy).

The day correlation index C_{d}(hx, hy) is for example computed as follows. Firstly, an array Pₕ^{*} is computed for each hour h of the day, each array containing a number H of values (for instance, H=4 values), where each value is the sum, over all the pixels and over a number of days, of the observations associated with a given time instance t during the considered hour. The array Pₕ^{*} is computed as follows: ${P}_{h}^{∗} = {\sum }_{i = 1}^{M} {\sum }_{d = 1}^{X} y \left(i, t, d\right)$ where M is the number of pixels, X is a number of days considered for the sum (e.g. all days within the considered month) and index t indicates a time instance during the considered hour h.

The day correlation coefficient C_{d}(hx, hy) related to the correlation of hour hx and hour hy during the day may be computed as follows: ${C}_{d} \left(hx, hy\right) = \frac{cov \left({P}_{hx}^{∗}, {P}_{hy}^{∗}\right)}{sd \left({P}_{hx}^{∗}\right) ⋅ sd \left({P}_{hy}^{∗}\right)} .$ where Pₕₓ^{*} is the array containing the sums of observations associated with hour hx and P_{hy}^{*} is the array containing the sums of observations associated with hour hy.

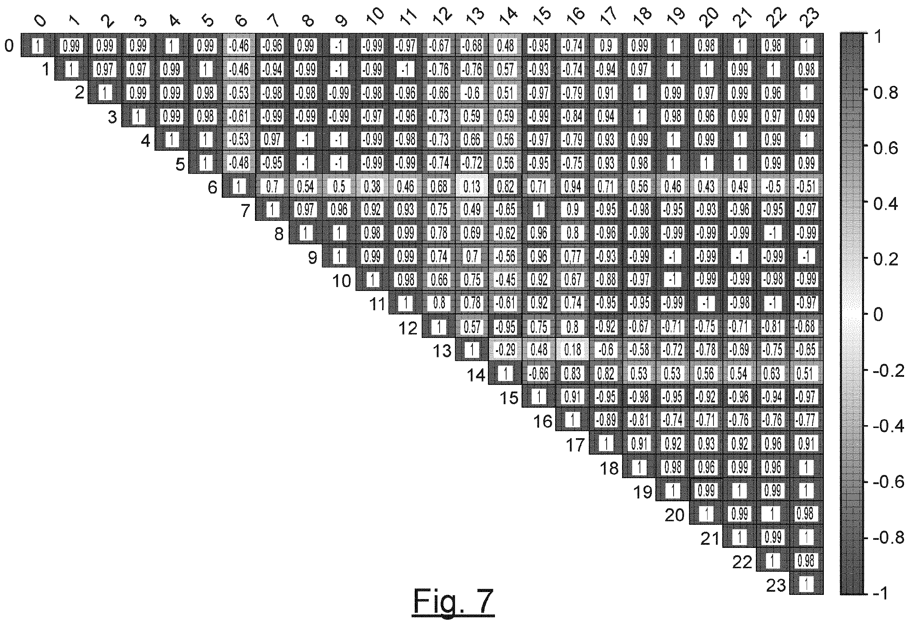

Figure 7 shows an exemplary day correlation matrix. The hours of the day are indicated with numbers from 0 to 23. The matrix reports, on a grey scale, the values of the day correlation index between each couple of hours during the day. The day correlation index of the exemplary matrix of Figure 7 ranges between -1 and 1. As apparent, the day correlation matrix is a diagonal matrix. The values on the diagonal are all equal to 1. The matrix of Figure 7 shows that, for example, the observations of the night hours (0-6 and 17-23) have a positive correlation between them, while they are negatively correlated with the observations of the daily hours (7-14).

Referring back to the flow chart of Figure 2, at the end of step 26 one or more typical days are identified. This means limiting the current data set to observations related to a one or more given days within the considered observation period. In particular, this step 26 comprises selecting one or more days during each week, or one or more days during the considered month, and limiting the current data set to the observations associated therewith. A typical day may be selected starting from the dissimilarity matrix. A typical day, in particular, is selected as the day on which the correlation coefficients are greater: in the example of Figure 6 it is noted that Wednesday and Sunday have a very low correlation index with the other days. If the correlation values of one day with the other days are added up, the sum is: Monday 5.22, Tuesday 5.28, Wednesday 4.24, Thursday 5.37, Friday 5.32, Saturday 5.32, Sunday 4.18. In this case, the highest value corresponds to Thursday.

In particular, when the observations related to one single day are selected for the subsequent analysis, the method provides for using them as they are, while when more days are identified, the median is computed. At the end of step 26, hence, the current data set comprises the observations of the single typical day or, alternatively, it comprises the values computed as the median of the observations when more typical days are identified.

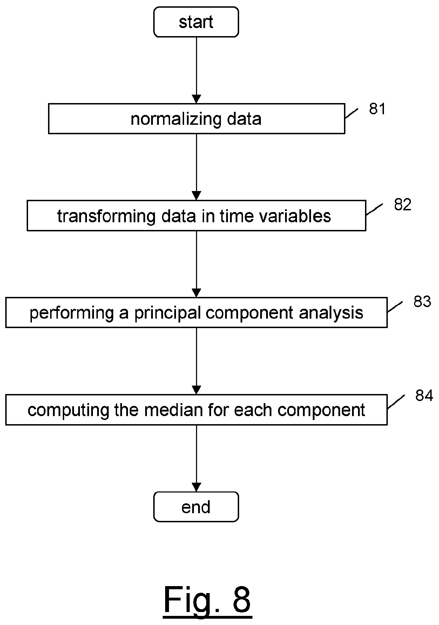

Referring back to the flow chart of Figure 2, step 27 comprises reducing the data of the current data set. Figure 8 is a flow chart illustrating the steps relating to reducing the data of the current data set.

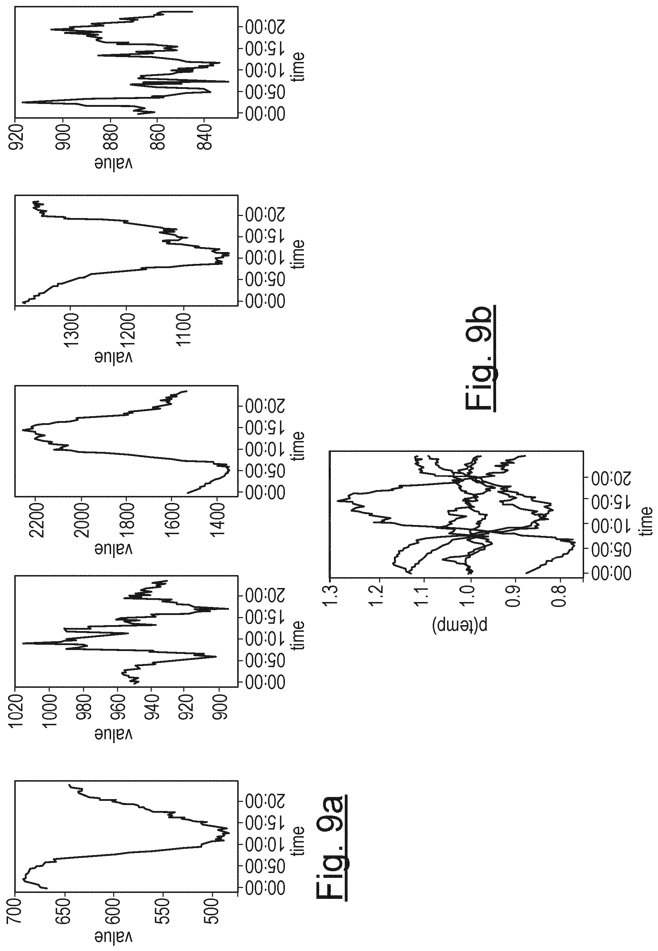

In particular, step 81 preferably comprises processing the data of the current set of data so as to normalize the values of the different observations of the current set of data within a common range. Indeed, the values of the observations are different from pixel to pixel, as can be seen from the exemplary graphs of Figure 9a. These graphs show the value of the presence of people in five different pixels over time (24 hours). Starting from the observations x(i, t) associated with the typical day, step 81 preferably comprises computing the following data: $\overline{x} \left(i\right) = \frac{1}{N ′} {\sum }_{t = 1}^{N ′} x \left(i, t\right) ,$ $σ \left(i\right) = \sqrt{\frac{{\sum }_{t = 1}^{N ′} {\left(x\left(i, t\right)-\overline{x}\left(i\right)\right)}^{2}}{N ′}} ,$ $\overline{x} \left(t\right) = \frac{1}{M ′} {\sum }_{i = 1}^{M ′} x \left(i, t\right) ,$ namely, respectively, the average value over time (where N' is an integer number representing the number of time instances over which the observations of the i-th pixel are to be normalized, which corresponds to the number of observations of the typical day), the standard deviation of the values of the observations for pixel i, and the average values over the pixels in the current data set (M' being an integer number smaller than or equal to M) of the values of the observations at time t.

Then, step 81 preferably comprises computing a normalized value x_{Norm}(i, t) for each value x(i, t) according to the following equation: ${x}_{Norm} \left(i, t\right) = \frac{x \left(i, t\right)}{\overline{x} \left(i\right)} .$

Figure 9b shows the normalized values of the data contained in the graphs of Figure 9a, the values having been normalized according to the above procedure. As can be seen, the trend of data over time along each graph is preserved after the normalization procedure described above, and data of the different pixels have comparable values.

Step 82 preferably comprises transforming the normalized data in time variables. **In** particular, a known Functional Data Analysis technique is preferably implemented. Preferably, the time-discrete normalized values x_{Norm}(i, t) are rewritten as a linear combination of a set of L basis functions (L being an integer number higher than 1) and transformed in a time variable x_{Norm}(i, t), namely: ${x}_{Norm} \left(i, t\right) ≅ {\sum }_{l = 1}^{L} {c}_{l} \left(i\right) {ϕ}_{l} \left(t\right)$
where I is an integer index ranging from 1 to L and the basis functions are, for instance, the following: ${φ}_{o} \left(t\right) = 1 ;$ ${φ}_{l} \left(t\right) = \frac{cos \left(lt\right)}{π}$ when I is an even number; ${φ}_{l} \left(t\right) = \frac{sin \left(lt\right)}{π}$ when I is an odd number,
while coefficients c_{I}(i) are the real-valued coefficients that allow a best reconstruction of the signal (typically, computed using a known Ordinary Least Squares (OLS) algorithm or more advanced techniques).

As already cited above, having 4 observations per hour means that the number of observations available per day is 96. Preferably, the number L of basis functions used for transforming the data in a time variable is equal to an odd number higher than half the number of daily observations. In case the number of daily observations is 96, the number of basis functions is preferably chosen to be 51. The choice of this number followed some tests performed by the inventors and represents a good compromise between the amount of stored data, the level of detail and the need to filter out the statistic noise associated with the gathered observations.

Step 83 preferably comprises applying a known Principal Component Analysis (PCA) technique, in order to further limit the amount of data. According to the present invention, the known functional version of this technique (fPCA) is adopted. This step preferably comprises rewriting the reconstructed signal Σ_{I} c_{I}(i)φ_{I}(t) as ${x}_{Norm} \left(i, t\right) ≅ {\sum }_{l} {c}_{l} \left(i\right) {φ}_{l} \left(t\right) ≅ {\sum }_{j = 1}^{k ′} {p}_{j} \left(i\right) {ψ}_{j} \left(t\right) = {d}_{i} \left(t\right)$ where
- x_{Norm}(i, t) is a row vector comprising the N' observations of the typical day for pixel i;
- ψⱼ(t) are the (functional) principal components (that is, the optimized basis functions);
- pⱼ(i) are the corresponding coefficient ("loadings"), computed via matrix multiplication;
- k' is the total number of principal components considered in reconstructing/rewriting x_{Norm}(i, t) (1≤k'≤L, where L is the total number of basis functions);
- dᵢ(t) results from rewriting x_{Norm}(i, t) in the principal components' space.
With fPCA, it is thus possible to rewrite the reconstructed signal Σ_{I} c_{I}(i)φ_{I}(t) in an optimised and more concise (k«I) way ${\sum }_{j = 1}^{k} {p}_{j} \left(i\right) {ψ}_{j} \left(t\right)$.

According to the method of the present invention, at the end of step 83, a sub-set of the principal components is considered for the subsequent analysis. Preferably, the sub-set comprises the first 3 principal components. Indeed, the inventors made some tests and found that considering only the first three principal components allows taking into consideration 90% of the variability of the original data.

Hence, at the end of step 83, a matrix Y is preferably computed of dimensions Mx3, wherein the i-th row of matrix Y comprises the components pⱼ(i) of the time variable x_{Norm}(i, t) associated with pixel i over the three-dimensional space of the first three principal components. Each row can be represented as a point in a scatter plot of matrix Y.

At step 84, the method provides for optionally computing an "average day" for each pixel i. This can be done by considering the time variables x_{Norm}(i, t) associated with pixel i for a number of days (preferably, the same weekday over a number of weeks in a month) and applying the principal component analysis technique already described above. Each day can be represented as a point in a scatter plot of the resulting matrix. The points are the closer the more the original data are similar. The average day of the considered pixel i can be chosen as the day associated with the median point of the group of resulting points in the scatter plot.

Alternatively, the method may provide for computing a median value associated with each principal component over the considered days.

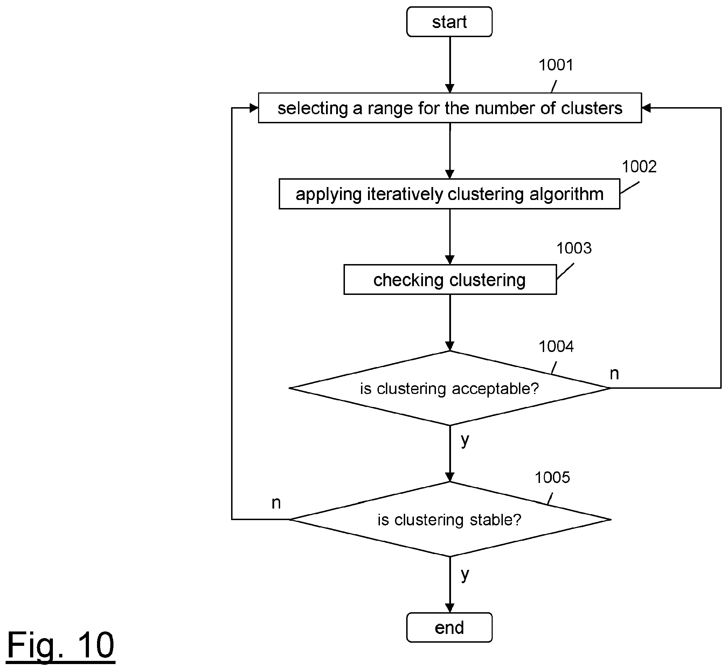

Referring back to the flow chart of Figure 2, step 28 comprises identifying the clusters of pixels. Identifying the clusters of pixels comprises the steps illustrated in the flow chart of Figure 10. In particular, the method of the present invention provides for using a clustering algorithm to determine, starting from matrix Y, a number K of clusters, wherein each cluster shows similar trends in the gathered data.

The clustering algorithm is preferably a centroid-based clustering algorithm, more preferably the known fuzzy k-means algorithm. Indeed, the inventors noticed that this particular algorithm is well suited for the considered analysis and allows providing an estimate about how accurate is the cluster determination for given data. However, other algorithms may be used as well, such as one of the following: k-means, PAM (Partitioning Around Medoids) k-medoids, CLARA (Clustering Large Applications), CLARANS (Clustering Large Applications based on RANdomized Search).

For sake of non-limiting example, the following description and Figure 10 will refer to the application of the fuzzy k-means algorithm. The input is the matrix Y comprising the components of the time variables representing the observations associated with all the pixels of area A. Step 1001 preferably provides for selecting a range of the number K of clusters. For instance, K may range between 2 and 15, or between 2 and 10, etc. Moreover, step 1001 preferably comprises selecting a fuzziness parameter. For instance, the fuzziness parameter is equal to 2. At step 1002, the clustering algorithm is preferably applied by considering a given value of K, for instance starting with 2, and fuzziness parameter, for instance 2. The fuzzy k-means algorithm is known and hence no further details will be provided herein after.

The algorithm is iteratively repeated by varying the value of K within the selected range. At the end of the iterations, the obtained clusters are preferably checked (step 1003). Preferably, step 1003 comprises applying one or more methods for checking an optimal number of clusters. The optimal number of clusters is the number of clusters according to which the points within each cluster are as close as possible to each other and each cluster is as far as possible from the other clusters.

In particular, preferably, the optimal number of clusters is determined by applying the known Elbow method. This method comprises computing the so called "within cluster sums of squares" as follows: $W {\left(Y, C\right)}_{K} = {\sum }_{k = 1}^{K} {\sum }_{i ∈ {Y}_{K}} {\left|{y}_{i}-{c}_{k}\right|}^{2}$ where C is the set of centroids, K is the considered number of clusters, cₖ is the centroid of the k-th cluster, Y is the matrix comprising the components yᵢ of the time variables representing the observations associated with all the pixels i of area A, Yₖ is the k-th partitioning created by the clustering algorithm.

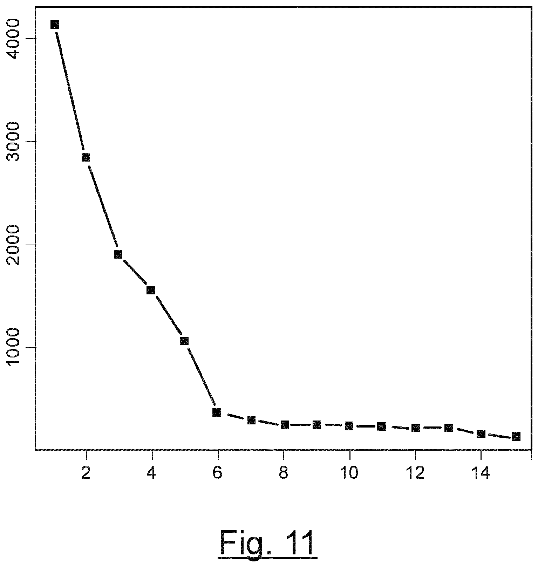

Figure 11 shows a graph representing exemplary values of W(Y,C)_{K} for different numbers of clusters (from 1 to 15).

According to the Elbow method, the optimal number of clusters is determined as the number which corresponds to an elbow on the graph of W(Y,C)_{K}. In Figure 11, the position of the elbow corresponds to a number of clusters equal to 6, which is hence the optimal number of clusters for the exemplary case illustrated therein.

Step 1003 may comprise applying another method such as the known silhouette method. The "silhouette" parameter is a measure of how close a point is to the other points of its cluster and how far it is with respect to the points of the other clusters. The silhouette varies between -1 and 1: a value close to 1 indicates that the point is close to the points of the cluster to which it has been assigned, and far with respect to the points of the other clusters, while a value close to -1 indicates that the point is not close to the points of the same cluster and hence its assignment is incorrect. Considering a number K of clusters, the silhouette is computed as follows: $S {\left(Y\right)}_{K} = \overline{\overline{s} {\left(y\right)}_{k}}$ $\overline{s} {\left(y\right)}_{k} = \frac{b \left(y\right) - a \left(y\right)}{max \left(a\left(y\right),b\left(y\right)\right)}$ where y is a point of a given cluster, s̅(y)ₖ is the average silhouette of points y of the k-th cluster, a(y) is the average distance between point y and the other points of the k-th cluster (internal cohesion), b(y) is the minimum average distance between y and the other points of all the clusters, S(Y)ₖ is the silhouette score, i.e. the average silhouette of all the points of all the K clusters.

The optimal number K of clusters is the number corresponding to the highest value of S(Y)_{K}, when K ranges within the range selected at step 1001.

At the end of step 1003, the optimal numbers of clusters obtained with the possibly different methods described above are preferably compared. With reference to the exemplary methods described above, in particular, the optimal numbers of clusters obtained by applying the Elbow method and the silhouette method are compared. In this case, if the numbers do not coincide, the optimal number of clusters is preferably the number obtained with the silhouette method.

At step 1004, the method provides for checking whether the clustering obtained by using the optimal number of clusters determined at step 1003 is acceptable. This means, for instance, checking whether the silhouette score S(Y)_{K} is acceptable, that is checking if it is close enough to 1 with a tolerance given by the current use case. In the negative, steps 1002 and 1003 are preferably repeated by considering a different range for the number of clusters K.

Once it is determined that the clustering is acceptable, at step 1005 the method provides for checking whether the clustering is stable. This means, according to a preferred embodiment, checking whether considering, as typical days, "similar" days over different weeks (e.g. every Monday over a number of consecutive weeks), the procedure described above gives the same clustering result. Checking the stability of the clustering may comprise determining how many pixels are grouped in a same cluster over different weeks. It will be assumed herein below that two similar days over two consecutive weeks are considered for sake of example. Step 1005 preferably comprises determining a square stability matrix of dimensions K×K (being K the number of clusters) wherein entry (i, j) in the matrix corresponds to the number of pixels belonging to the i-th cluster in the first day which have been assigned to the j-th cluster in the second day. This number is zero if none of the pixels assigned to the i-th cluster in the first day is assigned to the j-th cluster in the second day. The entries of the matrix may be normalized with respect to the number of pixels assigned to the i-th cluster in the first day or with respect to the number of pixels assigned to the j-th cluster in the second day. In either case, a value equal to 1 corresponds to a situation in which the same pixels are assigned to the i-th cluster in the first day and to the j-th cluster in the second day. A high value, namely higher than 0.7, is indeed indicative of the fact that pixels identified as similar in the first day (hence, assigned to the same cluster) remain similar also in the second day (and again assigned to a same cluster, not necessarily the same cluster of the first day).

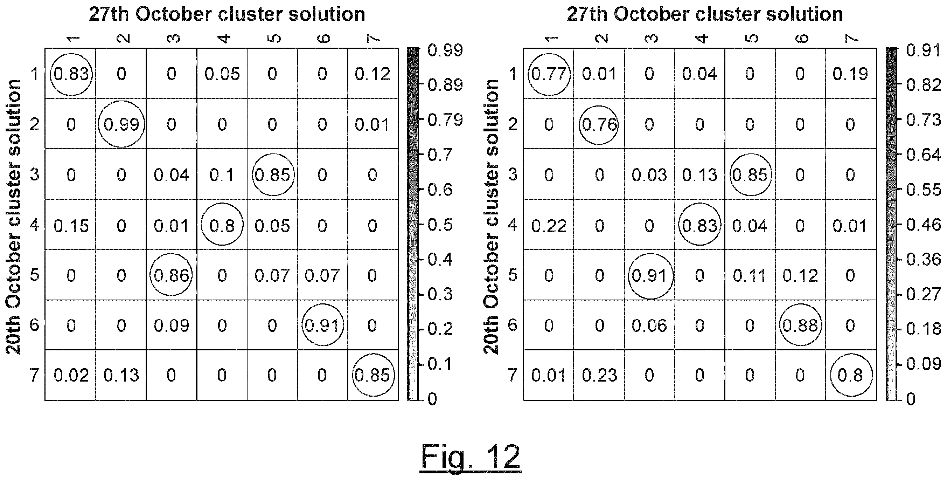

Figure 12 shows two exemplary stability matrices. A number of K=7 clusters is considered for sake of example, and the number of pixels within each cluster is taken into consideration for two exemplary days, October 20th and October 27th. The matrix on the left of Figure 12 contains values that have been normalized with respect to the number of pixels of the first day, while the matrix on the right of Figure 12 contains values that have been normalized with respect to the number of pixels of the second day.

Step 1005 further comprises determining a number of unstable pixels. An unstable pixel is a pixel that has been associated with different clusters over the considered days. More in particular, unstable pixels are those pixels that, in the stability matrix, are not associated with cells corresponding to the same cluster over different days. In the example considered above in Figure 12, unstable pixels belong, for example, to cluster 1 on the first day and to cluster 4 or 7 on the second day, or they belong to cluster 2 on the first day, and to cluster 7 on the second.

Then, step 1005 preferably comprises comparing the number of unstable pixels to a threshold S_{stab}. The obtained clustering is determined to be unstable if the number of unstable pixels is higher than the threshold. In this case, a further analysis is preferably performed to determine whether any unstable pixel corresponds to a portion of area A affected by a particular event or the like. As an outcome of this analysis, the unstable pixels may be excluded from the data set and the method may be applied again with an updated data set starting from the identification of the typical day. If the unstable pixels are not associated with perturbing events, the clustering algorithm may be applied again by considering the current cluster partitioning as a starting point and then, for instance, moving some elements from a cluster to another one or creating new clusters: in this case, a different number of clusters may be considered, as illustrated in the flow chart of Figure 12, and/or a different clustering algorithm may be applied.

Once the obtained clustering is determined to be stable, the area A is partitioned in the obtained clusters. It follows from the method described above that each cluster is indicative of a particular trend of a presence indicator, and/or a particular trend in a resource consumption, and may then be used to associate the respective group of pixels associated therewith with a particular characterization such as, for instance, one of the following: business, residential, tourist, and so on.

The method of the present invention then provides for allocating in an identified cluster available resources (for example electricity, gas, water, data network bandwidth, etc.), on the basis of the trends of a presence indicator and/or of a resource consumption associated with the cluster.

Also, the method provides for providing a service in the cluster on the basis of the allocated resources. The service may relate to the supply of e.g. water, gas, electricity, waste collection, data network, telephone network, etc.

Thanks to the method of the present invention, it is possible to better understand the social and human dynamics of a certain area, the changes that take place in the context (e.g. increase/decrease in the resident population), profile the customers based on consumption data, identify their habits and therefore be able to provide improved or additional services (for instance, greater telephone coverage at certain times of the year or greater quantities of water at certain hours/days of the week) or more suitable commercial offers.

Examples of application of the method of the present invention are:
- statistical estimate of the presence of users and their activity;
- evaluation of the correct required capacity and consequent improvement of the transport or telephone networks, supply of services (e.g. water, gas, electricity, waste collection, data network, telephone network);
- estimate of future traffic flows;
- Geo-Market Measurement: for example, on the basis of detectable presence data (e.g. people counters, video cameras, telephone data) it is possible to identify optimal opening times for shops/services;
- analysis of mobility patterns and footfall (counting of pedestrian flows);
- relevance of presence in specific events or "typical days";
- public security;
- monitoring of group dynamics for the development of commercial activities and their opening;
- sentiment analysis through social data;
- segmentation of customers based on spending behaviour;
- social activities.

The process described above and the obtained clusterization allows allocating the available resources in an effective way. This is of great importance when such resources are limited. Indeed, available resources can be configured and concentrated in clusters where they are most needed on the basis of the recognized trends in the resource consumption and/or in a presence indicator, as described above. This allows optimizing the resource allocation without any wastage thereof. Moreover, this allows providing services based on the allocated resources, which are hence tailored on the effective needs of users of a given area.

## Claims

1. A method for allocating resources in a geographic area (A), the method comprising:
a) subdividing said area (A) into a number of pixels;
b) selecting an observation period, **T,** and subdividing said observation period, **T,** in a number of predefined time sub-intervals;
c) acquiring a data set associated with said pixels during said observation period, **T,** the data set comprising, for each pixel, a set of observations related to the presence of people in said geographic area (A), wherein each observation derives from an estimate or a measurement of a resource consumption or a presence indicator;
d) processing said data set to identity one or more typical time sub-intervals during said observation period, T;
e) on the basis of a sub-set of data of said data set, the sub-set of data being associated with the identified one or more typical time-subintervals of said observation period, **T,** applying a clustering algorithm to partition said pixels into a number of clusters, each cluster comprising a respective group of pixels associated with similar trends in said resource consumption and/or in said presence indicator; and
f) allocating resources to a cluster of said number of clusters on the basis of said trends.

2. The method according to claim 1, wherein said processing said data set comprises checking whether each observation of said data set has a value higher than a first acceptability threshold, Sₘₐₓ, or lower than a second acceptability threshold, Sₘᵢₙ, and determining an acceptable observation as an observation having a value lower than or equal to said first acceptability threshold, Sₘₐₓ, and higher than or equal to said second acceptability threshold, Sₘᵢₙ.

3. The method according to claim 2, wherein said processing said data set comprises checking whether the number of acceptable observations, |P|, does not differ from the number of observations of the acquired data set of more than a predefined tolerance, ε, said number of observations of the acquired data set being equal to N x |T| x M, where N is the number of observations within a time sub-interval, d, M is the number of pixels, and |T| is the number of sub-intervals of the observation period, T.

4. The method according to claim 3, wherein said processing said data set comprises:
- checking, for each time sub-interval, d, whether the number of observations of the considered time sub-interval, |P_{d}|, is higher than or equal to an expected value corresponding to the number of observations of the acquired data set for the predefined sub-interval, d, plus a further predefined tolerance, where the number of observations of the acquired data set for the predefined sub-interval is equal to N x M and the further predefined tolerance is equal to ε/|T|;
- in the negative, identify one or more pixels associated with a number of observations which is smaller than an expected value of observations;
- in case a pixel is identified which, during the considered time sub-interval, d, is associated with a number of acceptable observations smaller than the expected value of observations, checking whether the number of missing observations is higher than a predefined threshold or whether observations are missing for a time period, within the considered time sub-interval, d, longer than a predefined number of hours;
- in the affirmative, discard from the data set the observations related to the identified pixel and associated with the considered time sub-interval, d.

5. The method according to claim 4, wherein said processing said data set comprises for each time sub-interval, d, checking whether the number of discarded pixels is higher than a further predetermined threshold, and, in the affirmative, discarding the observations associated with the considered time sub-interval, d, from the data set.

6. The method according to any of claims 3 to 5, wherein said processing said data set comprises identifying pixels where (xₘₐₓ(i) - xₘᵢₙ(i)) ≤ S_{low} , where xₘₐₓ(i) is the maximum value of the observations associated with a i-th pixel over a considered time period, xₘᵢₙ(i) is the minimum value of the observations associated with said i-th pixel over said considered time period, and S_{low} is a pre-defined threshold, wherein said considered time period comprises a number of consecutive time sub-intervals, and discarding from the data set the observations related to said identified pixels.

7. The method according to any of the preceding claims, wherein step e) comprises computing a normalized value, x_{Norm}(i, t), for each value of an observation, x(i, t), within said sub-set of data associated with a i-th pixel, wherein: ${x}_{Norm} \left(i, t\right) = \frac{x \left(i, t\right)}{\overline{x} \left(i\right)}$ where $\overline{x} \left(i\right) = \frac{1}{N ′} {\sum }_{t = 1}^{N ′} x \left(i, t\right) ,$ and N' is an integer number representing the number of observations of said sub-set of data for the i-th pixel.

8. The method according to claim 7, wherein step e) comprises:
- applying a functional data analysis technique to transform said normalized values in a time variable x_{Norm}(i, t) by rewriting them as a linear combination of a set of basis functions as: ${x}_{Norm} \left(i, t\right) ≅ {\sum }_{l} {c}_{l} \left(i\right) {φ}_{l} \left(t\right)$
where I is an integer index ranging from 1 to an integer number L representing a total number of basis functions and the basis functions are: ${φ}_{o} \left(t\right) = 1 ;$ ${φ}_{l} \left(t\right) = \frac{cos \left(lt\right)}{π}$ when I is an even number; ${φ}_{l} \left(t\right) = \frac{sin \left(lt\right)}{π}$ when I is an odd number,
while coefficients c_{I}(i) are real-valued coefficients;
- applying a principal component analysis technique as follows: ${x}_{Norm} \left(i, t\right) ≅ {\sum }_{l} {c}_{l} \left(i\right) {φ}_{l} \left(t\right) ≅ {\sum }_{j = 1}^{k ′} {p}_{j} \left(i\right) {ψ}_{j} \left(t\right)$ where
ψⱼ(t) are the functional principal components;
pⱼ(i) are the corresponding coefficients;
k' is a total number of principal components where 1≤k'≤L;
- determining a matrix, Y, of dimension equal to M x k', M being the number of pixels, wherein an i-th row of said matrix, Y, comprises said coefficients, pⱼ(i), of said functional principal components for said i-th pixel.

9. The method according to claim 8, wherein the number, k', of principal components is 3.

10. The method according to any of claims 8 or 9, wherein step e) comprises applying a centroid-based clustering algorithm to said matrix, Y.

11. The method according to claim 9, wherein said clustering algorithm is a fuzzy k-means algorithm.

12. The method according to any of claims 9 or 10, wherein step e) comprises applying a method for checking an optimal number of clusters, said method being an Elbow method or a silhouette method.

13. The method according to any of claims 9 to 11, wherein step e) comprises checking the stability of said clustering by:
- determining a stability matrix wherein an entry (i, j) in said stability matrix corresponds to the number of pixels belonging to a i-th cluster of said clustering in a first day which have been assigned to a j-th cluster of said clustering in a second day;
- determining a number of unstable pixels, wherein each unstable pixels is a pixel that has been associated with different clusters over the considered first day and second day;
- comparing said number of unstable pixels to a threshold, S_{stab};
- determining that said clustering is unstable if said number of unstable pixels is higher than said threshold, S_{stab}.

14. A computer program product comprising computer-executable instructions for performing, when the program is run on a computer, the steps of the method according to any of the preceding claims.

15. A system (100) for allocating resources in a geographic area (A), the system (100) comprising:
- a computation engine (101) configured to:
- subdivide said area (A) into a number of pixels;
- select an observation period, **T,** and subdivide said observation period, **T,** in a number of predefined time sub-intervals;
- acquire a data set associated with said pixels during said observation period, **T,** the data set comprising, for each pixel, a set of observations related to the presence of people in said geographic area (A), wherein each observation derives from an estimate or a measurement of a resource consumption or a presence indicator;
- process said data set to identity one or more typical time sub-intervals during said observation period, T;
- on the basis of a sub-set of data of said data set, the sub-set of data being associated with the identified one or more typical time-subintervals of said observation period, apply a clustering algorithm to partition said pixels into a number of clusters, each cluster comprising a respective group of pixels associated with similar trends in said resource consumption and/or in said presence indicator; and
- allocate resources to a cluster of said number of clusters on the basis of said trends;
- a repository (102) configured to store the data set; and
- a user interface (103) configured to receive inputs from, and to provide outputs to, a user of the system (100).

## Patentansprüche

1. Verfahren zum Zuteilen von Ressourcen in einem geografischen Gebiet (A), wobei das Verfahren Folgendes umfasst:
a) Unterteilen des Gebiets (A) in eine Anzahl von Pixeln;
b) Auswählen einer Beobachtungsperiode, T, und Unterteilen der Beobachtungsperiode, T, in eine Anzahl von vordefinierten Zeitunterintervallen;
c) Erfassen eines Datensatzes, der mit den Pixeln verknüpft ist, während der Beobachtungsperiode, T, wobei der Datensatz für jedes Pixel einen Satz von Beobachtungen umfasst, die sich auf die Anwesenheit von Personen in dem geografischen Gebiet (A) beziehen, wobei jede Beobachtung eine Schätzung oder eine Messung eines Ressourcenverbrauchs oder eines Anwesenheitsindikators ableitet;
d) Verarbeiten des Datensatzes, um ein oder mehrere typische Zeitunterintervalle während der Beobachtungsperiode, T, zu identifizieren;
e) Anwenden eines Clustering-Algorithmus, um die Pixel in ein Anzahl von Clustern zu unterteilen, auf Basis eines Untersatzes von Daten des Datensatzes, wobei der Untersatz von Daten mit dem einen oder den mehreren identifizierten typischen Zeitunterintervallen der Beobachtungsperiode, T, verknüpft ist, wobei jedes Cluster eine jeweilige Gruppe von Pixeln umfasst, die mit ähnlichen Trends des Ressourcenverbrauchs und/oder des Anwesenheitsindikators verknüpft sind; und
f) Zuteilen von Ressourcen zu einem Cluster der Anzahl von Clustern auf Basis der Trends.

2. Verfahren nach Anspruch 1, wobei das Verarbeiten des Datensatzes das Überprüfen, ob jede Beobachtung des Datensatzes einen Wert aufweist, der größer ist als ein erster Akzeptanzschwellwert, Sₘₐₓ, oder niedriger als ein zweiter Akzeptanzschwellwert, Sₘᵢₙ, sowie das Bestimmen einer akzeptablen Beobachtung als eine Beobachtung, die einen Wert aufweist, der kleiner als oder gleich dem ersten Akzeptanzschwellwert, Sₘₐₓ, und größer als oder gleich dem zweiten Akzeptanzschwellwert Sₘᵢₙ ist.

3. Verfahren nach Anspruch 2, wobei das Verarbeiten des Datensatzes das Überprüfen umfasst, ob die Anzahl von akzeptablen Beobachtungen, |P|, sich von der Anzahl von Beobachtungen des erfassten Datensatzes nicht um mehr als eine vordefinierte Toleranz, ε, unterscheidet, wobei die Anzahl von Beobachtungen des erfassten Datensatzes gleich N x |T| x M ist, wo N die Anzahl von Beobachtungen in einem Zeitunterintervall, d, ist, M die Anzahl von Pixeln ist und |T| die Anzahl von Unterintervallen der Beobachtungsperiode, T, ist.

4. Verfahren nach Anspruch 3, wobei das Verarbeiten des Datensatzes Folgendes umfasst:
- Überprüfen für jedes Zeitunterintervall, d, ob die Anzahl von Beobachtungen des betreffenden Zeitunterintervalls, |P_{d}|, größer als oder einem erwarteten Wert gleich ist, der der Anzahl von Beobachtungen des erfassten Datensatzes für das vordefinierte Unterintervall, d, plus einer weiteren vordefinierten Toleranz entspricht, wo die Anzahl von Beobachtungen des erfassten Datensatzes für das vordefinierte Unterintervall gleich N x M ist und die weitere vordefinierte Toleranz gleich ε/|T| ist;
- wenn nicht, Identifizieren von einem oder mehreren Pixeln, die mit einer Anzahl von Beobachtungen verknüpft sind, die kleiner ist als ein erwarteter Wert von Beobachtungen;
- in einem Fall, in dem ein Pixel identifiziert wird, das während des betreffenden Zeitunterintervalls, d, mit einer Anzahl von akzeptablen Beobachtungen verknüpft ist, die kleiner ist als der erwartete Wert von Beobachtungen, Überprüfen, ob die Anzahl von fehlenden Beobachtungen größer als ein vordefinierter Schwellwert ist, oder ob Beobachtungen für eine Zeitperiode im betreffenden Zeitunterintervall, d, fehlen, das länger ist als eine vordefinierte Anzahl von Stunden;
- wenn ja, Verwerfen der Beobachtungen, die sich auf das identifizierte Pixel beziehen und mit dem betreffenden Zeitunterintervall, d, verknüpft sind, aus dem Datensatz.

5. Verfahren nach Anspruch 4, wobei das Verarbeiten des Datensatzes für jedes Zeitunterintervall, d, das Überprüfen umfasst, ob die Anzahl von verworfenen Pixeln größer ist als ein weiterer vorbestimmter Schwellwert, und wenn ja, Verwerfen der Beobachtungen, die mit dem betreffenden Zeitunterintervall, d, verknüpft sind, aus dem Datensatz.

6. Verfahren nach einem der Ansprüche 3 bis 5, wobei das Verarbeiten des Datensatzes das Identifizieren von Pixeln, wo (Xₘₐₓ(i) - Xₘᵢₙ(i)) ≤ S_{low}, wo xₘₐₓ(i) der Höchstwert der Beobachtungen ist, die mit einem i-ten Pixel über eine betreffende Zeitperiode verknüpft sind, xₘᵢₙ(i) der Mindestwert der Beobachtungen ist, die mit dem i-ten Pixel über die betreffende Zeitperiode verknüpft sind, und S_{low} ein vordefinierter Schwellwert ist, wobei die betreffende Zeitperiode eine Anzahl von aufeinanderfolgenden Zeitunterintervallen umfasst, sowie das Verwerfen der Beobachtungen, die sich auf die identifizierten Pixel beziehen, umfasst.

7. Verfahren nach einem der vorhergehenden Ansprüche, wobei Schritt e) das Berechnen eines normalisierten Wertes, x_{Norm}(i, t), für jeden Wert einer Beobachtung, x(i, t) in dem Untersatz von Daten umfasst, die mit einem i-ten Pixel verknüpft ist, wobei: ${x}_{Norm} \left(i, t\right) = \frac{x \left(i, t\right)}{\overline{x} \left(i\right)}$ wo $\overline{x} \left(i\right) = \frac{1}{N ′} {\sum }_{t = 1}^{N ′} x \left(i, t\right) ,$ und N' eine Ganzzahl ist, die die Anzahl von Beobachtungen des Untersatzes von Daten für das i-te Pixel repräsentiert.

8. Verfahren nach Anspruch 7, wobei Schritt e) Folgendes umfasst:
- Anwenden einer funktionalen Datenanalysetechnik, um die normalisierten Werte in einer Zeitvariable x_{Norm}(i, t) durch Neuschreiben derselben als eine Linearkombination eines Satzes von Basisfunktionen als Folgendes umzuwandeln: ${x}_{Norm} \left(i, t\right) ≅ {\sum }_{l} {c}_{l} \left(i\right) {φ}_{l} \left(t\right)$
wo I ein Ganzzahlindex ist, der von 1 bis zu einer Ganzzahl L reicht, die eine Gesamtzahl von Basisfunktionen repräsentiert, und die Basisfunktionen Folgendes sind: $φ \left(t\right) = 1 ;$ ${φ}_{l} \left(t\right) = \frac{cos \left(lt\right)}{π} ,$ wenn I eine gerade Zahl ist; ${φ}_{l} \left(t\right) = \frac{sin \left(lt\right)}{π} ,$ wenn I eine ungerade Zahl ist,
während Koeffizienten c_{I}(i) Koeffizienten mit realen Werten sind;
- Anwenden einer Hauptkomponentenanalysetechnik wie folgt: ${x}_{Norm} \left(i, t\right) ≅ {\sum }_{l} {c}_{l} \left(i\right) {φ}_{l} \left(t\right) ≅ {\sum }_{j = 1}^{k ′} {p}_{j} \left(i\right) {ψ}_{j} \left(t\right)$ wo
ψⱼ(t) die funktionalen Hauptkomponenten sind;
p (i) die entsprechenden Koeffizienten sind;
k' eine Gesamtzahl von Hauptkomponenten ist, wo 1≤k'≤L;
- Bestimmen einer Matrix, Y, einer Dimension, die gleich M x k' ist, wobei N die Anzahl von Pixeln ist, wobei eine i-te Zeile der Matrix, Y, die Koeffizienten, pⱼ(i) der funktionalen Hauptkomponenten für das i-te Pixel umfasst.

9. Verfahren nach Anspruch 8, wobei die Anzahl, k', von Hauptkomponenten 3 ist.

10. Verfahren nach einem der Ansprüche 8 oder 9, wobei Schritt e) das Anwenden eines Clusteringalgorithmus auf Basis eines Mittelpunktes auf die Matrix, Y, umfasst.

11. Verfahren nach Anspruch 9, wobei der Clusteringalgorithmus ein Fuzzy-k-Means-Algorithmus ist.

12. Verfahren nach einem der Ansprüche 9 oder 10, wobei Schritt e) das Anwenden eines Verfahrens zum Überprüfen einer optimalen Anzahl von Clustern umfasst, wobei das Verfahren ein Ellbogenverfahren oder ein Silhouettenverfahren ist.

13. Verfahren nach einem der Ansprüche 9 bis 11, wobei Schritt e) das Überprüfen der Stabilität des Clustering durch Folgendes umfasst:
- Bestimmen einer Stabilitätsmatrix, wo ein Eintrag (i, j) in der Stabilitätsmatrix der Anzahl von Pixeln entspricht, die zu einem i-ten Cluster des Clustering an einem ersten Tag gehören, die einem j-ten Cluster des Clustering an einem zweiten Tag zugewiesen wurden;
- Bestimmen einer Anzahl von instabilen Pixeln, wobei jedes instabile Pixel ein Pixel ist, das mit verschiedenen Clustern über den ersten Tag und den zweiten betreffenden Tag verknüpft wurde;
- Vergleichen der Zahl von instabilen Pixeln mit einem Schwellwert S_{stab};
- Bestimmen, dass das Clustering instabil ist, wenn die Anzahl von instabilen Pixeln größer ist als der Schwellwert S_{stab}.

14. Computerprogrammprodukt, das computerausführbare Anweisungen zum Durchführen der Schritte des Verfahrens nach einem der vorhergehenden Ansprüche, wenn das Programm auf einem Computer läuft, umfasst.

15. System (100) zum Zuteilen von Ressourcen in einem geografischen Gebiet (A), wobei das System (100) Folgendes umfasst:
- eine Berechnungsmaschine (101), die zu Folgendem ausgelegt ist:
- Unterteilen des Gebiets (A) in eine Anzahl von Pixeln;
- Auswählen einer Beobachtungsperiode, T, und Unterteilen der Beobachtungsperiode, T, in eine Anzahl von vordefinierten Zeitunterintervallen;
- Erfassen eines Datensatzes, der mit den Pixeln verknüpft ist, während der Beobachtungsperiode, T, wobei der Datensatz für jedes Pixel einen Satz von Beobachtungen umfasst, die sich auf die Anwesenheit von Personen in dem geografischen Gebiet (A) beziehen, wobei jede Beobachtung eine Schätzung oder eine Messung eines Ressourcenverbrauchs oder eines Anwesenheitsindikators ableitet;
- Verarbeiten des Datensatzes, um ein oder mehrere typische Zeitunterintervalle während der Beobachtungsperiode, T, zu identifizieren;
- Anwenden eines Clustering-Algorithmus, um die Pixel in ein Anzahl von Clustern zu unterteilen, auf Basis eines Untersatzes von Daten des Datensatzes, wobei der Untersatz von Daten mit dem einen oder den mehreren identifizierten typischen Zeitunterintervalle der Beobachtungsperiode verknüpft ist, wobei jedes Cluster eine jeweilige Gruppe von Pixeln umfasst, die mit ähnlichen Trends des Ressourcenverbrauchs und/oder des Anwesenheitsindikators verknüpft sind; und
- Zuteilen von Ressourcen zu einem Cluster der Anzahl von Clustern auf Basis der Trends;
- ein Repositorium (102), das dazu ausgelegt ist, den Datensatz zu speichern; und
- eine Benutzerschnittstelle (103), die dazu ausgelegt ist, Eingaben von einem Benutzer des Systems (100) zu empfangen und Ausgaben an dasselbe bereitzustellen.

## Revendications

1. Procédé d'allocation de ressources dans une zone géographique (A), le procédé comprenant :
a) une subdivision de ladite zone (A) en un certain nombre de pixels ;
b) une sélection d'une période d'observation, T, et la subdivision de ladite période d'observation, T, en un certain nombre de sous-intervalles de temps prédéfinis ;
c) une acquisition d'un ensemble de données associé auxdits pixels pendant ladite période d'observation, T, l'ensemble de données comprenant, pour chaque pixel, un ensemble d'observations relatives à la présence de personnes dans ladite zone géographique (A), dans lequel chaque observation provient d'une estimation ou d'une mesure d'une consommation de ressources ou d'un indicateur de présence ;
d) un traitement dudit ensemble de données afin d'identifier un ou plusieurs sous-intervalles de temps typiques pendant ladite période d'observation, T ;
e) sur la base d'un sous-ensemble de données dudit ensemble de données, le sous-ensemble de données étant associé au ou aux sous-intervalles de temps typiques identifiés de ladite période d'observation, T, une application d'un algorithme de partitionnement afin de partitionner lesdits pixels en un certain nombre de groupes, chaque groupe comprenant un ensemble respectif de pixels associés à des tendances similaires de ladite consommation de ressources et/ou dudit indicateur de présence ; et
f) une allocation de ressources à un groupe parmi ledit nombre de groupes sur la base desdites tendances.

2. Procédé selon la revendication 1, dans lequel ledit traitement dudit ensemble de données comprend la vérification du fait que chaque observation dudit ensemble de données présente ou non une valeur supérieure à un premier seuil d'acceptabilité, Sₘₐₓ, ou inférieure à un second seuil d'acceptabilité, Sₘᵢₙ, et la détermination d'une observation acceptable comme étant une observation présentant une valeur inférieure ou égale audit premier seuil d'acceptabilité, Sₘₐₓ, et supérieure ou égale audit second seuil d'acceptabilité, Sₘᵢₙ.

3. Procédé selon la revendication 2, dans lequel ledit traitement dudit ensemble de données comprend la vérification du fait que le nombre d'observations acceptables, |P|, ne diffère pas du nombre d'observations de l'ensemble de données acquis de plus d'une tolérance prédéfinie, ε, ledit nombre d'observations de l'ensemble de données acquis étant égal à N x |T| x M, où N est le nombre d'observations au sein d'un sous-intervalle de temps, d, M est le nombre de pixels, et |T| est le nombre de sous-intervalles de la période d'observation, T.

4. Procédé selon la revendication 3, dans lequel ledit traitement dudit ensemble de données comprend :
- une vérification, pour chaque sous-intervalle de temps, d, du fait que le nombre d'observations du sous-intervalle de temps considéré, |P_{d}|, est ou non supérieur ou égal à une valeur attendue correspondant au nombre d'observations de l'ensemble de données acquis pour le sous-intervalle prédéfini, d, plus une tolérance prédéfinie supplémentaire, le nombre d'observations de l'ensemble de données acquis pour le sous-intervalle prédéfini étant égal à N x M et la tolérance prédéfinie supplémentaire étant égale à ε/|T| ;
- dans la négative, une identification d'un ou plusieurs pixels associés à un nombre d'observations qui est inférieur à une valeur attendue d'observations ;
- dans le cas où est identifié un pixel qui, pendant le sous-intervalle de temps considéré, d, est associé à un nombre d'observations acceptables inférieur à la valeur attendue d'observations, la vérification du fait que le nombre d'observations manquantes est ou non supérieur à un seuil prédéfini ou du fait que des observations sont ou non manquantes pendant une durée, au sein du sous-intervalle de temps considéré, d, supérieure à un nombre d'heures prédéfini ;
- dans l'affirmative, un rejet, hors de l'ensemble de données, des observations relatives au pixel identifié et associées au sous-intervalle de temps considéré, d.

5. Procédé selon la revendication 4, dans lequel ledit traitement dudit ensemble de données comprend, pour chaque sous-intervalle de temps, d, la vérification du fait que le nombre de pixels rejetés est ou non supérieur à un seuil prédéterminé supplémentaire, et, dans l'affirmative, le rejet, hors de l'ensemble de données, des observations associées au sous-intervalle de temps considéré, d.

6. Procédé selon l'une quelconque des revendications 3 à 5, dans lequel ledit traitement dudit ensemble de données comprend l'identification des pixels pour lesquels (xₘₐₓ(i) - xₘᵢₙ(i)) ≤ S_{low}, où xₘₐₓ(i) est la valeur maximale des observations associées à un i-ème pixel sur une période de temps considérée, xₘᵢₙ(i) est la valeur minimale des observations associées audit i-ème pixel sur ladite période de temps considérée, et S_{low} est un seuil prédéfini, dans lequel ladite période de temps considérée comprend un certain nombre de sous-intervalles de temps consécutifs, et le rejet, hors de l'ensemble de données, des observations relatives auxdits pixels identifiés.

7. Procédé selon l'une quelconque des revendications précédentes, dans lequel l'étape e) comprend le calcul d'une valeur normalisée, x_{Norm}(i, t), pour chaque valeur d'une observation, x(i, t), au sein dudit sous-ensemble de données associé à un i-ème pixel, dans lequel : ${x}_{Norm} \left(i, t\right) = \frac{x \left(i, t\right)}{\overline{x} \left(i\right)}$ où $\overline{x} \left(i\right) = \frac{1}{N ′} {\sum }_{t = 1}^{N ′} x \left(i, t\right) ,$ et N' est un nombre entier représentant le nombre d'observations dudit sous-ensemble de données pour le i-ème pixel.

8. Procédé selon la revendication 7, dans lequel l'étape e) comprend :
- une application d'une technique d'analyse de données fonctionnelles pour transformer lesdites valeurs normalisées en une variable temporelle x_{Norm}(i, t) en les réécrivant comme une combinaison linéaire d'un ensemble de fonctions de base, comme suit : ${x}_{Norm} \left(i, t\right) ≅ {\sum }_{l} cl \left(i\right) φl \left(t\right)$
où l est un indice entier allant de 1 à un nombre entier L représentant un nombre total de fonctions de base et les fonctions de base sont : ${φ}_{o} \left(t\right) = 1 ;$ ${φ}_{l} \left(t\right) = \frac{cos \left(lt\right)}{π}$ lorsque l est un nombre pair ; ${φ}_{l} \left(t\right) = \frac{sin \left(lt\right)}{π}$ lorsque l est un nombre impair,
tandis que les coefficients cₗ(i) sont des coefficients à valeurs réelles ;
- l'application d'une technique d'analyse en composantes principales comme suit : ${x}_{Norm} \left(i, t\right) ≅ {\sum }_{l} cl \left(i\right) φl \left(t\right) ≅ {\sum }_{j = 1}^{k ′} pj \left(i\right) ψj \left(t\right)$ où
ψⱼ(t) sont les composantes principales fonctionnelles ;
pⱼ(i) sont les coefficients correspondants ;
k' est un nombre total de composantes principales, où 1 ≤ k' ≤ L ;
- une détermination d'une matrice, Y, de dimension égale à M x k', M étant le nombre de pixels, dans lequel une i-ème ligne de ladite matrice, Y, comprend lesdits coefficients, pⱼ(i), desdites composantes principales fonctionnelles pour ledit i-ème pixel.

9. Procédé selon la revendication 8, dans lequel le nombre, k', de composantes principales est égal à 3.

10. Procédé selon l'une quelconque des revendications 8 ou 9, dans lequel l'étape e) comprend l'application d'un algorithme de partitionnement basé sur des centroïdes à ladite matrice, Y.

11. Procédé selon la revendication 9, dans lequel ledit algorithme de partitionnement est un algorithme de k-moyennes en flou.

12. Procédé selon l'une quelconque des revendications 9 ou 10, dans lequel l'étape e) comprend l'application d'un procédé de vérification d'un nombre optimal de groupes, ledit procédé étant une méthode du coude ou une méthode de silhouette.

13. Procédé selon l'une quelconque des revendications 9 à 11, dans lequel l'étape e) comprend la vérification de la stabilité dudit partitionnement par :
- la détermination d'une matrice de stabilité, dans laquelle une entrée (i, j) de ladite matrice de stabilité correspond au nombre de pixels appartenant à un i-ème groupe dudit partitionnement lors d'un premier jour qui ont été affectés à un j-ème groupe dudit partitionnement lors d'un second jour ;
- la détermination d'un nombre de pixels instables, dans lequel chaque pixel instable est un pixel qui a été associé à des groupes différents sur le premier jour et le second jour considérés ;
- la comparaison dudit nombre de pixels instables à un seuil, S_{stab} ;
- la détermination du fait que ledit partitionnement est instable si ledit nombre de pixels instables est supérieur audit seuil, S_{stab}.

14. Produit-programme d'ordinateur comprenant des instructions exécutables par ordinateur pour mettre en œuvre, lorsque le programme est exécuté sur un ordinateur, les étapes du procédé selon l'une quelconque des revendications précédentes.

15. Système (100) d'allocation de ressources dans une zone géographique (A), le système (100) comprenant :
- un moteur de calcul (101) configuré pour :
- subdiviser ladite zone (A) en un certain nombre de pixels ;
- sélectionner une période d'observation, T, et subdiviser ladite période d'observation, T, en un certain nombre de sous-intervalles de temps prédéfinis ;
- acquérir un ensemble de données associé auxdits pixels pendant ladite période d'observation, T, l'ensemble de données comprenant, pour chaque pixel, un ensemble d'observations relatives à la présence de personnes dans ladite zone géographique (A), dans lequel chaque observation provient d'une estimation ou d'une mesure d'une consommation de ressources ou d'un indicateur de présence ;
- traiter ledit ensemble de données afin d'identifier un ou plusieurs sous-intervalles de temps typiques pendant ladite période d'observation, T ;
- sur la base d'un sous-ensemble de données dudit ensemble de données, le sous-ensemble de données étant associé au ou aux sous-intervalles de temps typiques identifiés de ladite période d'observation, appliquer un algorithme de partitionnement afin de partitionner lesdits pixels en un certain nombre de groupes, chaque groupe comprenant un ensemble respectif de pixels associés à des tendances similaires de ladite consommation de ressources et/ou dudit indicateur de présence ; et
- allouer des ressources à un groupe parmi ledit nombre de groupes sur la base desdites tendances ;
- un référentiel (102) configuré pour stocker l'ensemble de données ; et
- une interface utilisateur (103) configurée pour recevoir des entrées d'un utilisateur du système (100) et pour lui fournir des sorties.
